# EUROPEAN PATENT APPLICATION

(11) **EP 1 026 057 A1**
(43) Date of publication of application: **09.08.2000**
(21) Application number: 00200321.8
(22) Date of filing: 31.01.2000
(51) Int. Cl.: B60S 9/08

(54) **System and method for levelling vehicles, such as caravans**

(30) Priority: 01.02.1999 NL 1011181
(71) Applicant: Letec (Level Technology) B.V., 5237 TN 's-Hertogenbosch (NL)
(72) Inventor: Smits, Petrus Paulus Johanna, 5237 TN 's-Hertogenbosch (NL)
(74) Representative: Fieret, Johannes, Ir.

(57) **Abstract**

A system and a method for levelling a chassis (3) of a vehicle (1) which is basically centrally supported by one or more axles (4), in particular for a towed vehicle (1) such as a caravan. The system comprises lifting means (9,10) which are positioned near the ends of the axle or axles (4) of the chassis (3), sensor means (11) for measuring an angle of inclination of the chassis (3) at least in the direction of the axle (4), and control means coupled with said sensor means (11) and said lifting means (9,10). The control means are arranged for adjusting the lifting means (9,10) for height in dependence on the sensor means (11), in such a manner that the chassis (3) is brought into said level position. By adding further height adjustable lifting means (17;18;19), which are provided near the centre on the front side or on the rear side of the chassis (3), the chassis (3) or the caravan can be levelled fully automatically by means of suitably arranged control means.

## Description

A system and a method for bringing a chassis of a vehicle which is basically centrally supported by one or more axles, such as a caravan, into a predetermined position.

The invention relates to a system and method for bringing a chassis of a vehicle which is basically centrally supported by one or more axles, in particular a towed vehicle such as a caravan, into a predetermined position.

When a caravan is to be used in a parking place or a caravan park, for example, in particular on hilly terrain, the chassis needs to be brought into a horizontal position relative to the ground surface. That is, both in the longitudinal direction of the caravan and in the transverse direction thereof, or in other words, in the direction of the axle.

To this end, caravans are usually provided with four corner supports in the form of hand-operated jacks and the like, by means of which the chassis can be levelled. Because the chassis must be set horizontal both in the longitudinal direction and in the transverse direction of the caravan, a certain technical skill is required for setting up a caravan, in particular when a separate spirit level is being used.

Also the changing of a wheel, for example, in case of a puncture and/or maintenance work is often a difficult job with caravans or other vehicles of this kind.

Accordingly, it is an object of the invention to provide a system as referred to in the introduction, by means of which the vehicle or the caravan can automatically be brought into a predetermined position.

As generally caravans are used only a few times a year and in most cases are stored in a sheltered garage for the rest of the year, their technical life span is relatively long.

Also in view of the large number of caravans of the type as described above, that is, caravans fitted with hand-operated corner supports, it must also be possible without any problem to provide existing caravans with such an automatic positioning system, whilst furthermore the price/performance ratio of the system must be favourable.

The system according to the invention is in the first instance characterized by:
- lifting means which are automatically adjustable for height, which are positioned near the ends of the axle or axles of the chassis,
- sensor means for measuring an angle of inclination of the chassis at least in the direction of the axle, and
- control means coupled with said sensor means and said lifting means for adjusting the lifting means for height in dependence on the sensor means, in such a manner that the chassis is brought into said predetermined position.

The system according to the invention makes it possible to automatically adjust the chassis of the vehicle for height under the control of the sensor means. The angle of inclination in the direction of the axle is thereby set on the basis of a deviation relative to a starting position as measured by the sensor means, such as a horizontal position of the axle or axles, for example.

When used with a caravan provided with a system according to the invention as described above, which caravan comprises a height or vertically adjustable front wheel or jockey wheel, corner supports and means for setting the chassis horizontal or level in longitudinal direction, such as a spirit level, for example, the invention provides a method for levelling the caravan or bringing the caravan into a horizontal position both in the longitudinal direction and in the transverse direction, comprising the steps of:
- bringing the caravan into a horizontal position in the longitudinal direction by means of the height adjustable jockey wheel, using the means for setting the caravan horizontal or level,
- activating the system for automatically setting the caravan horizontal in the direction of the axle, and
- locking the caravan in the position set by the system by means of the corner supports.

The system according to the invention is in the first instance based on the perception that the levelling of the caravan is already highly simplified by using only two lifting means mounted near the ends of the axle or axles.

Although this will increase the cost, the system according to the invention may also comprise more than two lifting means disposed at different positions of the chassis, so that also the manual levelling in longitudinal direction can be automised.

In another embodiment of the invention a lifting means is to that end disposed near the front wheel or jockey wheel, for example, with the sensor means being arranged for measuring an angle of inclination or oblique position of the chassis in the longitudinal direction of the caravan.

Such a system can operate fully automatically for levelling a chassis or setting it horizontal or level both lengthwise and crosswise without any interference from the user other than the activation of the system. In particular for older people or people who are not very skilful, the system according to the invention provides a quick and adequate manner of setting up a caravan or similar vehicle.

Yet another embodiment of the invention provides not only for the bringing of the chassis into a horizontal position, but also into for example a sloping position such that the chassis is clear of the ground with one axle wheel or all axle wheels at one end of the axle or axles. In such a position it is readily possible to change one or more wheels or to carry out maintenance work on the chassis, on the axle or on the wheels.

As already said before, vehicles such as caravans are used actively only for a limited period of the year. In order to prevent damage to the wheels, to the tyres or to the ground surface on which the caravan is stored in unused condition, the invention furthermore makes it possible to bring the chassis into such a position that all axle wheels are clear of the ground.

In order to prevent the chassis being moved while the lifting means are activated, the invention provides in yet another embodiment thereof for the generation of a locking signal, wherein the control means can also be arranged for disabling the activation of the lifting means.

The locking signal, for example in the form of an electric locking signal, can be used in combination with a starter disabling system of a motor vehicle for moving the towed vehicle. All this in such a manner that the towing vehicle cannot be started while the locking signal is active. If desired, an acoustic and/or optical warning signal can be generated either in combination with the locking signal or separately while the locking means are activated.

By arranging the control means for releasing and deactivating the lifting means in dependence on a user-specific releasing command in yet another embodiment of the invention, an effective protection against theft or unauthorized moving of the chassis is obtained. The releasing command may for example consist of a personal identification code to be input, an identification label or other means suitable for identification purposes.

The sensor means are preferably mounted under the chassis, near the centre of the axle or axles. It has become apparent that an electronically operating level sensor which is accurate to within 1 - 1.5 mm per metre, for example, is suitable for the purpose of the invention.

In a preferred embodiment of the invention the lifting means comprise a spindle element, a gear transmission and an electric motor for adjusting the spindle element in longitudinal direction under the control of the control means. In order to prevent a situation wherein the lifting means cannot be activated in case of a power failure or other malfunction, said lifting means are preferably so arranged that they can be manually operated. This can for example be done with the same operating means that can be used for operating the corner supports or jacks that are mounted under the chassis of a caravan.

In order to prevent malfunctions caused by fouling and weather influences as much as possible, the lifting means are protected by a suitable housing, wherein the extending spindle may be provided with protective bellows, if desired.

The invention can be used with vehicles having a new chassis, wherein the lifting means, sensor means and control means are directly incorporated in the chassis or in the body supported by the chassis, as well as with existing vehicles, such as caravans. To this end the invention provides a kit comprising lifting means, sensor means and control means for providing an existing caravan or an existing chassis with a system according to the invention.

The invention furthermore relates to a caravan comprising a system according to the invention as described above, which provides, in the most extensive embodiment thereof, the following four functions:
a. Automatic lengthwise and crosswise levelling of the caravan;
b. Easy wheel change;
c. Anti-theft protection; and
d. Storage position, preventing distortion of the tyres in case of prolonged standstill.

The invention will be described in more detail hereafter with reference to the drawings, which show a preferred embodiment for use in combination with a caravan. It should be understood that the invention is not limited to this embodiment and to this field of application.
Figure 1 is a schematic top plan view of a chassis of a single-axle vehicle, such as a caravan.
Figure 2 is a schematic longitudinal view along line II-II of the chassis of Figure 1, showing the lifting means in activated position.
Figure 3 is a schematic, larger-scale side view of the lifting means of Figure 2.
Figure 4 is a schematic top plan view of the lifting means of Figure 3.
Figure 5 is an electric block diagram of one embodiment of control means of the system according to the invention.

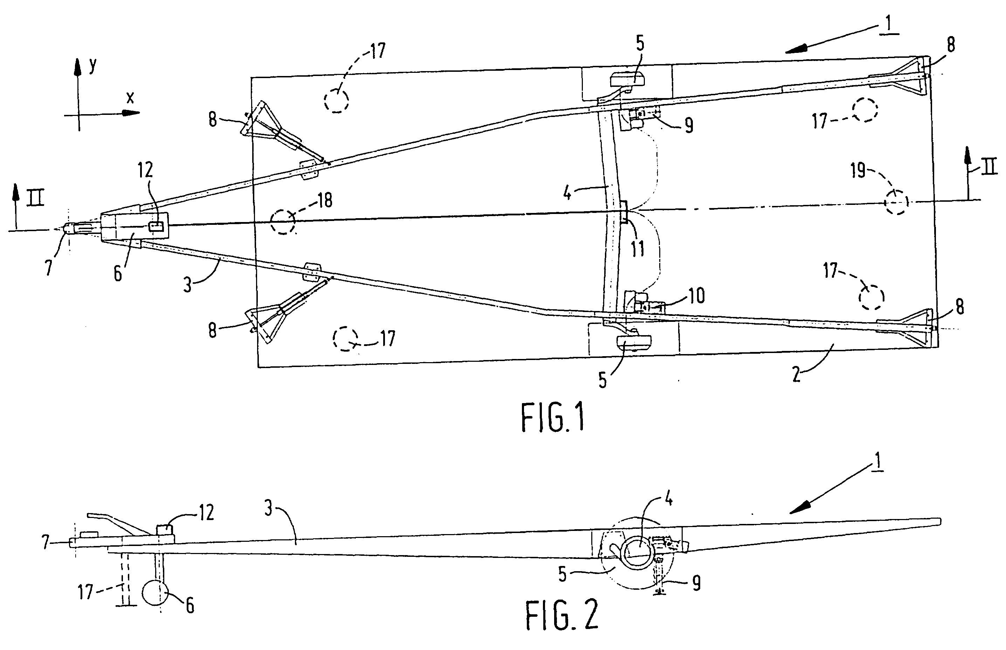

Figure 1 shows in top plan view a vehicle 1 in the form of a caravan comprising a body 2, which is only shown in contour, and a chassis 3. The caravan 1 is centrally supported by a single axle 4 and wheels 5. Present on the towed side 7 of caravan 1 is a jockey wheel or front wheel 6, which is adjustable for height. The chassis 3 is furthermore provided near the corner points of the body 2 with manually or electrically operated jacks or the like. Said corner supports 8 function to stabilize the caravan 1 in parked position. During transport of caravan 1 the corner supports 8 are in their folded or retracted position during transport of the caravan 1, as is shown in the figure.

In accordance with the invention, lifting means 9, 10 are attached to the chassis 3 near the ends of the axle 4. Sensor means 11 are mounted on the chassis 3, centrally between the lifting means 9, 10, for measuring in accordance with the invention at least an angle of inclination of the chassis 3 relative to the ground surface in the longitudinal direction of the axle 4, that is, in the y-direction in the figure.

Figure 2 is a longitudinal view of the chassis 3, without the body 2, along line II-II in Figure 1. The figure shows the caravan 1 in a position wherein the lifting means 9, 10 are operative, that is, with lifting devices 9, 10 in their extended position. Mounted near the jockey wheel 6 are level means 12 in the form of a spirit level or the like for setting the caravan 1 horizontal, that is, horizontally or level relative to the ground surface, in the longitudinal direction of chassis 3, that is, in the x-direction in the figure.

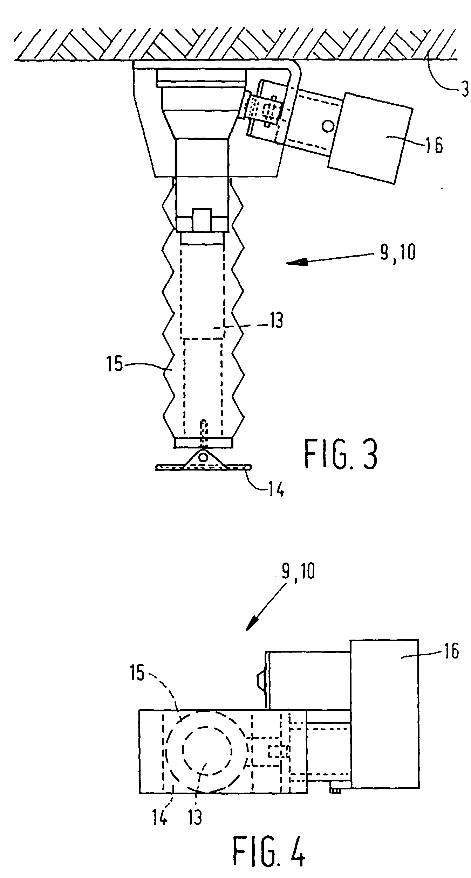

Figure 3 shows a preferred embodiment of the lifting means 9, 10. Each lifting means 9, 10 comprises a spindle element 13, for example in the form of a trapezium spindle element comprising several extending sections. A pivotable base or support plate 14 is mounted on the end of the spindle element 13. The spindle element 13 can be enveloped by a protective bellows 15, if desired, to protect it against moisture and dirt. The protective bellows 15 follows the change in length of the spindle element 13. The lifting means 9, 10 are mounted on the chassis 3 or are integral therewith. A housing of plastic material (not shown) functions to screen the whole unit from moisture and dirt. The spindle element is driven by means of an electric motor 16 and an intermediate gear transmission (not shown).

Figure 4 is a top plan view of the lifting means 9, 10, seen from the chassis 3.

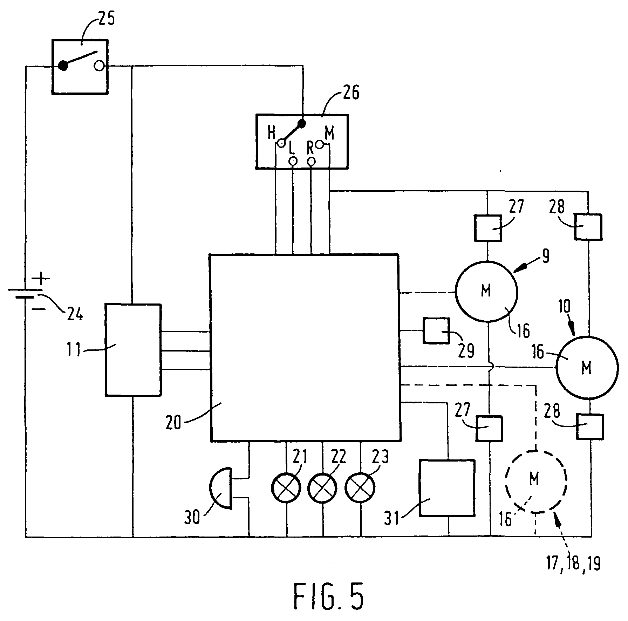

Figure 5 shows in a block diagram an electric circuit diagram for controlling the lifting means 9, 10 or the electric motors 16 thereof, comprising an electronic control circuit 20. Said control circuit 20 may be built up of usual electronic components and/or be processor-controlled, as will be understood by those skilled in the art.

Connected to control circuit 20 are sensor means 11 for setting the chassis 3 horizontal at least in the direction of the axle (the y-direction). In a preferred embodiment of the invention, the sensor means 12 consist of an electronically operating level sensor, which delivers signals to the control circuit 20 at least in accordance with the momentaneous angle of inclination of chassis 3 in the direction of the axle (the y-direction).

A number of optical warning means in the form of Light Emitting Diodes (LED's) 21, 22, 23 may be connected to the control circuit 20. Said LED's are so controlled that LED 21 will light up when chassis 3 leans over to the left, LED 22 will light up when the chassis leans over to the right and LED 23 will light up when chassis 3 is horizontal. LED's 21 and 22 can for example emit light of a red colour, whilst LED 23 emits green light. The lighting up of LED 23 indicates that the system or the lifting means 9, 10 according to the invention are activated.

The circuit is supplied with electricity from an power supply source 24, for example a battery. A main switch 25, for example in the form of a key-operated switch 25, is incorporated in the main supply line. This makes it possible to interrupt the power supply of the system completely so as to prevent activation thereof while the vehicle is driving. Furthermore connected to the control circuit 20 is a selector switch 26. The motors 16 of lifting means 9, 10 can be activated by manual control by means of pushbutton switches 27, 28.

Control circuit 20 is furthermore provided with an input/output interface 29, as well as with acoustic warning means 30, for example in the form of a buzzer or loudspeaker, and with means 31 for inputting user-specific commands, such as a keypad, a magnetic card reader or smart card reader or the like.

Selector switch 26, which can be operated by hand or by means of a special key by the user, includes a position H for automatically setting chassis 3 horizontal, a position L for controlling only the lifting means 10 on the left-hand side of the chassis 3, seen in the direction of the towed end 7 thereof, a position R for controlling only the lifting means on the right-hand side of chassis 3, and a position M for manually operating the motors 16 of lifting means 9, 10 via pushbutton switches 27 and 28. The operation of the circuit is as follows.

In the position H of the selector switch 26, the lifting means 9, 10 are so controlled under the influence of sensor means 11 that the chassis 3 is set horizontal in the direction of the axle. This takes place fully automatically. In the horizontal position the LED 23 will light up and a locking signal will be delivered via the I/O interface 29, for example for interrupting the motor of a towing vehicle (not shown) in order to prevent the caravan 1 being moved while the lifting means 9, 10 are activated. When it is attempted to start the motor of the towing vehicle, also a signal can be delivered to the control circuit via the I/O interface 29, to activate the acoustic warning signals 30.

In the position L of selector switch 26, the lifting means 10 are activated to lift the chassis 3 to such a position that the wheel 5 on the left-hand side of the caravan 1 will come clear of the ground. In the position R of selector switch 26, only the lifting means 9 are activated so as to cause the wheel 5 on the right-hand side of the chassis 3 to come clear of the ground. This may be done for the purpose of changing a respective wheel, for example, or carrying out maintenance or repair work.

In position M, the two lifting means 9, 10 can be activated automatically and by hand via pushbutton switches 27, 28, for example for placing the caravan 3 in a winter storage position, wherein both wheels 5 must be clear of the ground. This is done in order to prevent the tyres from sustaining damage as a result of being loaded in constantly the same place for a prolonged period of time. In this position a provision is furthermore made that lifting means 9, 10 cannot be retracted until a user-specific releasing command is input via means 31, for example a PIN code or a code via a magnetic card, a smart card or other electronic means which are suitable for this purpose. Thus an effective protection against theft is obtained. After all, the caravan 1 cannot be moved while the lifting means 9, 10 are activated.

When a caravan 1 fitted with the system according to the invention as discussed above is to be levelled, it is disconnected from the towing vehicle upon arrival at the slot in question and brought into a horizontal position in longitudinal direction in the first instance by means of the adjustable jockey wheel 6. This is a simple operation in itself. Then the system according to the invention is set to position H via the selector switch 26, after which the chassis 3 is fully automatically brought into a horizontal position in the direction of the axle 4 with the aid of the lifting means 9, 10. In this position caravan 1 is horizontal relative to the ground surface and the corner supports 8 can be folded out or extended for stabilising the caravan 1 or the chassis 3. The lifting means 9, 10 can now be deactivated or retracted, if desired. This is not necessary, however.

The invention is not limited to use with a caravan comprising a single-axle support 4, of course, but it can also be used with caravans having two or more centrally mounted axles, with the lifting means 9, 10 being mounted between the axles, for example.

Although this will increase the cost of the system, it is also possible to use more than two lifting means 9, 10, for example lifting means 17 near the corner points of the caravan 1 in place of or in addition to the corner supports 8 and lifting means 9, 10, or lifting means 18 near the jockey wheel 6, or for example lifting means 19 centrally at the rear of caravan 1, in combination with lifting means 9, 10. All this as schematically illustrated in broken lines in Figure 1.

In the case of a lifting means 17 disposed near the jockey wheel 6, for example, as is illustrated in broken lines in Figure 2, the chassis can be set horizontal or level fully automatically both in the x-direction and in the y-direction, whereby the sensor means 11 are of course arranged for measuring an angle of inclination in the x-direction or longitudinal direction of the chassis 3 as well. It is also possible to mount further sensor means on the chassis 3 for this purpose, of course.

In order to set the chassis 3 or the caravan 1 horizontal, it is preferable to bring the caravan into a slightly backwardly inclined position by means of the vertically adjustable jockey wheel 6 before activating the system according to the invention. In the case of a lifting means mounted centrally near the rear side of caravan 1, that is, seen from the towed side 7 of the caravan 1, it will be apparent that the caravan, in order to be set horizontal, must be brought into a slightly forwardly inclined position before the levelling system is activated.

It stands to reason that if further lifting means 17, 18, 19 are provided, the control circuit 20 will be arranged for suitably controlling said lifting means in accordance with an inclined position of chassis 3 in the x-direction as measured by the sensor means 11. All this as illustrated in broken lines in the circuit diagram of Figure 5.

In order to be able to operate the lifting means 9, 10 also in case of a power failure, said lifting means are so constructed that they can be operated by means of a standard corner support crank in case of an emergency. The system according to the invention is suitable for light caravans as well as for heavier caravans or generally for vehicles which are basically centrally supported by one or more axles.

In the case of new caravans, the system according to the invention can be directly integrated therein. For existing caravans, a kit is provided which comprises the control means as described with reference to Figure 5, the lifting means 9, 10 and the sensor means 11. The whole is so constructed that a handy do-it-yourselfer will be capable of installing the system.

In order to enable easy control, the switching means 25, 26, 27 and 28 as well as the LED's 21, 22 and 23 and the means 31 for inputting a user-specific command can be placed on one control panel. In the case of a caravan, this panel can be installed near the door of the caravan, for example.

The invention is not limited to the above-described embodiments as shown in the drawings. Many modifications and additions are possible for a person skilled in the art without departing from the scope of the invention. In particular the type and the principle of operation of the lifting means, such as hydraulically or pneumatically operated lifting means, may be considered in this regard. The use of this type or any other type of lifting means shall be considered to form part of the invention.

## Claims

1. A system for bringing a chassis of a vehicle which is basically centrally supported by one or more axles, in particular a towed vehicle such as a caravan, into a predetermined position, characterized by:
- lifting means which are automatically adjustable for height, which are positioned near the ends of the axle or axles of the chassis,
- sensor means for measuring an angle of inclination of the chassis at least in the direction of the axle (the y-direction), and
- control means coupled with said sensor means and said lifting means for adjusting the lifting means for height in dependence on the sensor means, in such a manner that the chassis is brought into said predetermined position.

2. A system according to claim 1, characterized in that said control means are arranged for bringing the chassis into an essentially horizontal position in the direction of the axle.

3. A system according to claim 1, characterized in that said control means are arranged for bringing the chassis into such a position that the or each axle wheel at an end of the axle or axles are clear of the ground.

4. A system according to claim 1 or 2, characterized in that said control means are arranged for bringing the chassis into such a position that all axle wheels are clear of the ground.

5. A system according to any of the preceding claims, characterized in that said control means are arranged for providing a locking signal when one or more of said lifting means is (are) activated.

6. A system according to any of the preceding claims, characterized in that said control means are arranged for locking the lifting means.

7. A system according to claim 6, characterized in that said control means are arranged for releasing and deactivating the locking means in dependence on a user-specific releasing command.

8. A system according to claim 5, 6 or 7, characterized by optical and/or acoustic signalling means for providing a warning signal while the lifting means are activated.

9. A system according to claim 8, characterized by means for coupling the locking signal and the warning signal with a towing vehicle so as to prevent the chassis being moved while the lifting means are activated.

10. A system according to any of the preceding claims, characterized in that said sensor means are mounted on the chassis, near the centre of the axle or axles.

11. A system according to claim 10, characterized in that said sensor is a level sensor which operates electronically.

12. A system according to any of the preceding claims, characterized in that said lifting means comprise a spindle element, a gear transmission and an electric motor for adjusting the spindle element in longitudinal direction.

13. A system according to claim 12, characterized by a protective bellows that envelopes the spindle element.

14. A system according to any of the preceding claims, characterized by more than two lifting means disposed at different positions of the chassis.

15. A system according to claim 14, characterized in that one or more further lifting means which are automatically adjustable for height are disposed near the centre on the front side and/or on the rear side of the chassis.

16. A system according to claim 15, characterized in that said sensor means are arranged for measuring an oblique position of the chassis both in the direction of the axle (the y-direction) and in the longitudinal direction (the x-direction), and that said control means are arranged for adjusting the lifting means for height such that the chassis is brought into an essentially horizontal position.

17. A kit comprising lifting means, sensor means and control means for arranging a system according to any of the preceding claims.

18. A caravan comprising a chassis which is basically centrally supported by one or more axles, and which is provided with a system according to any of the preceding claims.

19. A method for levelling a caravan provided with a system according to any of the preceding claims 1 - 13, further comprising a height adjustable front wheel or jockey wheel, corner supports and means for setting the chassis horizontal or level in longitudinal direction, such as a spirit level, comprising the steps of:
- bringing the caravan into an essentially horizontal position in the longitudinal direction by means of said height adjustable jockey wheel, using said means for setting the caravan horizontal or level,
- activating the system for automatically setting the caravan essentially horizontal in the direction of the axle, and
- locking the caravan in the position set by the system by means of the corner supports.

20. A method for levelling a caravan provided with a system according to claim 16, further comprising a height adjustable front wheel or jockey wheel, characterized by the steps of:
- bringing the caravan into a slightly inclined position in the longitudinal direction by means of the height adjustable jockey wheel,
- activating the system for automatically setting the caravan essentially horizontal in the longitudinal direction and in the direction of the axle, and
- locking the caravan in the position set by the system by means of the corner supports.
